# EUROPÄISCHE PATENTSCHRIFT

(11) **EP 4 175 099 B1**
(45) Veröffentlichungstag und Bekanntmachung des Hinweises auf die Patenterteilung: **25.11.2026**
(21) Anmeldenummer: 21205325.0
(22) Anmeldetag: 28.10.2021
(51) Int. Cl.: H02J 3/00, H02M 7/06, H02M 7/12, H02J 3/001, H02J 4/25

(54) **ENERGIEVERSORGUNGSSCHALTKREIS FÜR EIN RÖNTGENSTRAHLERZEUGUNGSSYSTEM**
ENERGY SUPPLY CIRCUIT FOR AN X-RAY BEAM GENERATION SYSTEM
CIRCUIT D'ALIMENTATION ÉLECTRIQUE POUR UN SYSTÈME DE GÉNÉRATION DE RAYONS X

(43) Veröffentlichungstag der Anmeldung: 03.05.2023
(60) Teilanmeldung: 26208613.5 / 4 841 853
(73) Patentinhaber: Siemens Healthineers AG, 91301 Forchheim (DE)
(72) Erfinder: Gebert, Bernhard, 91083 Hagenau (DE); Wimmer, Michael, 91085 Weisendorf (DE); Holland-Nell, Christian, 91361 Pinzberg (DE)
(74) Vertreter: Siemens Healthineers Patent Attorneys

(56) Entgegenhaltungen:
- CN-Y- 201 393 172
- DE-A1- 4 204 115
- US-A- 4 995 069
- US-A1- 2012 326 504

## Beschreibung

Die Erfindung betrifft einen Energieversorgungsschaltkreis für ein Röntgenstrahlerzeugungssystem sowie ein Röntgenstrahlerzeugungssystem mit einem solchen Energieversorgungsschaltkreis.

Energieversorgungssysteme für Röntgengeneratoren sind u.a. aus den folgenden Dokumenten des Standes der Technik bekannt: CN201393172Y, US2012/326504 A1, DE 42 04 115 A1 und US4995069A. Solche Systeme weisen üblicherweise einen (Netz-) Gleichrichter und einem an diesen gekoppelten Wechselrichter auf.

Röntgenstrahlerzeugungssysteme, beispielsweise für Computertomographiesysteme, können dreiphasig betrieben werden, beispielsweise mit einer Sollspannung von mehreren hundert Volt und einem relativ großen Toleranzbereich. Ein Beispiel wäre etwa eine Sollspannung von 400 V mit einem Toleranzbereich von +10%/-20%. Solche Röntgenstrahlerzeugungssysteme stellen wegen ihrer kurzzeitig hohen Leistungsaufnahme sehr hohe Anforderungen an die Infrastruktur, beispielsweise Sicherungen, Kabelquerschnitte, und so weiter, des Gebäudes in dem sie installiert sind. Der Netzinnenwiderstand am Anschlusspunkt darf dabei insbesondere nur so hoch sein, dass der Spannungseinbruch während einer Röntgenaufnahme nicht zu einer Unterspannung für andere angeschlossene Geräte führt.

Zur Anpassung an den großen Betriebsspannungsbereich könnte einerseits ein Anpasstransformator verwendet werden. Dadurch entstehen hohe zusätzliche Kosten. Alternativ könnte ein Röntgenstrahlerzeugungssystem mit Weitbereichseingang verwendet werden. Hierbei müsste ein erheblicher Teil der möglichen Generatorleistung größtenteils ungenutzt für mögliche Betriebsspannungen vorgehalten werden. Bei Röntgenstrahlerzeugungssystemen mit zwei Röntgenstrahlern muss durch die gesamte Leistungskette, inklusive Gleichrichtung, Schleifring, Netzfilter und Gebäudeanschluss, hindurch ein zweiter Netzanschluss geführt werden, sodass die Anforderung an die bauseitige Installation entsprechend drastisch steigen.

Es ist eine Aufgabe der vorliegenden Erfindung, die Leistungsaufnahme aus einem Energieversorgungsnetz durch ein Röntgenstrahlerzeugungssystem zu reduzieren.

Diese Aufgabe wird durch den Gegenstand des unabhängigen Anspruchs gelöst. Vorteilhafte Weiterbildungen und bevorzugte Ausführungsformen sind Gegenstand der abhängigen Ansprüche.

Die Erfindung beruht auf dem Gedanken, zwischen dem Gleichrichterschaltkreis und dem Wechselrichterschaltkreis für ein Röntgenstrahlerzeugungssystem einen Pufferschaltkreis in Reihe zu schalten, der seinerseits eine Vielzahl zueinander in Reihe geschalteter Energiespeicherzellen aufweist. So wird ein Energieversorgungsschaltkreis für ein Röntgenstrahlerzeugungssystem bereitgestellt, der bei gegebener Ausgangsleistung des Röntgenstrahlerzeugungssystems die maximale Leistungsaufnahme aus dem Energieversorgungsnetz reduziert oder, mit anderen Worten, bei gegebener maximaler Leistungsaufnahme aus dem Energieversorgungsnetz die Ausgangsleistung des Röntgenstrahlerzeugungssystems erhöht.

Gemäß einem Aspekt der Erfindung wird ein Energieversorgungsschaltkreis für ein Röntgenstrahlerzeugungssystem angegeben. Das Röntgenstrahlerzeugungssystem weist einen Wechselrichterschaltkreis auf, welcher einen Ausgang zur Verbindung des Wechselrichterschaltkreises mit einer Röntgenquelle des Röntgenstrahlerzeugungssystems aufweist. Der Energieversorgungsschaltkreis weist einen Gleichrichterschaltkreis auf, der einen Eingang zur Verbindung des Gleichrichterschaltkreises mit einem Energieversorgungsnetz aufweist, wobei ein Ausgang des Gleichrichterschaltkreises mit einem Eingang des Wechselrichterschaltkreises verbindbar ist. Der Energieversorgungsschaltkreis weist außerdem einen Pufferschaltkreis auf, der eine Vielzahl von zueinander in Reihe geschalteten elektrischen Energiespeicherzellen aufweist. Die Vielzahl von Energiespeicherzellen ist dabei in Reihe zwischen den Eingang des Wechselrichterschaltkreises und den Ausgang des Gleichrichterschaltkreises schaltbar.

In verschiedenen Ausführungsformen des Energieversorgungsschaltkreises enthält dieser auch den Wechselrichterschaltkreis. Der Ausgang des Gleichrichterschaltkreises ist dann insbesondere mit dem Eingang des Wechselrichterschaltkreises verbunden und Die Vielzahl von Energiespeicherzellen ist insbesondere in Reihe zwischen den Eingang des Wechselrichterschaltkreises und den Ausgang des Gleichrichterschaltkreises geschaltet.

Der Pufferspeicher kann in verschiedenen Ausführungsformen zwei oder mehrere zueinander parallel geschaltete Stränge von jeweils in Reihe geschalteten Energiespeicherzellen aufweisen. Es ist also nicht nur eine reine Reihenschaltung möglich.

Sofern nicht anders angegeben, kann eine elektrische Verbindung hier und im Folgenden eine direkte elektrische Verbindung oder eine indirekte elektrische Verbindung sein.

Das Energieversorgungsnetz, welches nicht Teil des Energieversorgungsschaltkreises oder des Röntgenstrahlerzeugungssystems ist, ist insbesondere als Wechselstromnetz beziehungsweise Wechselspannungsnetz ausgestaltet. Die Wechselspannung beziehungsweise der Wechselstrom am Eingang des Gleichrichterschaltkreises wird durch diesen in eine Gleichspannung beziehungsweise einen Gleichstrom am Ausgang des Gleichrichterschaltkreises umgewandelt. Der Ausgang des Gleichrichterschaltkreises und der Eingang des Wechselrichterschaltkreises zwischen welche die Vielzahl von Energiespeicherzellen in Reihe geschaltet ist, entsprechen dabei Anschlüssen derselben Polarität.

Das Energieversorgungsnetz kann insbesondere ein mehrphasiges, beispielsweise dreiphasiges, Energieversorgungsnetz sein. Dementsprechend ist der Gleichrichterschaltkreis dann als mehrphasiger, beispielsweise dreiphasiger, Gleichrichterschaltkreis ausgestaltet. Mit anderen Worten wandelt der Gleichrichterschaltkreis dann die durch das Energieversorgungsnetz bereitgestellten drei Phasen der Wechselspannung beziehungsweise des Wechselstroms in eine gemeinsame Gleichspannung beziehungsweise einen gemeinsamen Gleichstrom am Ausgang des Gleichrichterschaltkreises um, insbesondere zwischen dem Ausgang und einem Referenzpotentialanschluss, beispielsweise einem Masseanschluss.

Der Wechselrichterschaltkreis kann die so erzeugte Gleichspannung dann wiederum in eine Wechselspannung beziehungsweise einen Wechselstrom zur Versorgung der Röntgenquelle, insbesondere also einen einphasigen Wechselstrom beziehungsweise eine einphasige Wechselspannung, zur Versorgung der Röntgenquelle umwandeln.

Vor dem Einsatz des Röntgenstrahlerzeugungssystems, also im Falle eines Computertomographiesystems beispielsweise vor Scanbeginn, kann die Vielzahl von Energiespeicherzellen auf eine vorgegebene Spannung aufgeladen werden. Die Energiespeicherzellen sind in Reihe zwischen dem Gleichrichterschaltkreis und dem Wechselrichterschaltkreis angeordnet, sodass sie zusätzlich zu der über den Gleichrichterschaltkreis aus dem Energieversorgungsnetz bereitgestellten Spannung einen weiteren Beitrag zur Spannungsversorgung des Wechselrichterschaltkreises und damit der Röntgenquelle liefern. Die Spannung der Energiespeicherzellen kann beispielsweise derart gewählt werden, dass die gesamte Spannung, die an dem Wechselrichterschaltkreis anliegt, einer maximal zulässigen Spannung entspricht.

Nach Beginn der Röntgenstrahlerzeugung kann die von dem Energieversorgungsnetz bereitgestellte Netzspannung durch die hohe Leistungsaufnahme des Röntgenstrahlerzeugungssystems einbrechen. Durch den Pufferschaltkreis und die in den Energiespeicherzellen der Vielzahl von Energiespeicherzellen gespeicherte Energie kann dennoch die erforderliche Spannung zum Betrieb des Röntgenstrahlerzeugungssystems bereitgestellt werden.

Die maximale Leistungsaufnahme des Röntgenstrahlerzeugungssystems aus dem Energieversorgungsnetz reduziert sich also in dem Maß, in dem die Eingangsspannung für den Wechselrichterschaltkreis durch den Pufferschaltkreis erhöht wird. Alternativ oder zusätzlich zur Reduzierung der Leistungsaufnahme des Röntgenstrahlerzeugungssystems kann der Energieversorgungsschaltkreis durch den Pufferschaltkreis auch zur Erhöhung der Ausgangsleistung des Röntgenstrahlerzeugungssystems bei gegebenem Netzanschluss dienen.

Erfindungsgemäß kann also dem Röntgenstrahlerzeugungssystem eine vom Energieversorgungsnetz weitgehende unabhängige Versorgungsspannung zur Verfügung gestellt werden. Ein für einen Weitbereichsausgang ausgelegtes Röntgenstrahlerzeugungssystem kann durch ein entsprechend angepasstes Wicklungsverhältnis des Hochspannungstransformators wesentlich mehr Leistung erzielen. Das Röntgenstrahlerzeugungssystem wird somit auch wesentlich unabhängiger von der Netzimpedanz des Energieversorgungsnetzes am Anschlusspunkt.

Der Energieversorgungsschaltkreis oder der Wechselrichterschaltkreis weist einen Gleichspannungszwischenkreis auf, der zwischen den Eingang des Wechselrichterschaltkreises und den Pufferschaltkreis schaltbar oder geschaltet ist.

Der Gleichspannungszwischenkreis kann dementsprechend die dem Wechselrichterschaltkreis bereitgestellte Gleichspannung stabilisieren. Beispielsweise kann der Gleichspannungszwischenkreis einen Zwischenspeicherkondensator oder mehrere zueinander in Reihe und/oder parallel geschaltete Zwischenspeicherkondensatoren aufweisen, der oder die insbesondere dem Eingang des Wechselrichterschaltkreises und dem Ausgang des Gleichrichterschaltkreises parallelgeschaltet sind.

Gemäß zumindest einer Ausführungsform weist der Pufferschaltkreis eine Vielzahl von zueinander in Reihe geschalteten weiteren elektrischen Energiespeicherzellen auf. Außerdem weist der Pufferschaltkreis ein Schaltelement auf, das beispielsweise einen Transistor enthält, und das angeordnet und dazu eingerichtet ist, eine Reihenschaltung der Vielzahl weiterer Energiespeicherzellen zwischen dem Eingang des Wechselrichterschaltkreises und dem Ausgang des Gleichrichterschaltkreises wahlweise herzustellen und zu unterbrechen.

Mit anderen Worten ist die Vielzahl von weiteren Energiespeicherzellen in Reihe zwischen den Eingang des Wechselrichterschaltkreises und den Ausgang des Gleichrichterschaltkreises geschaltet, wobei diese Reihenschaltung durch das Schaltelement wahlweise unterbrochen und hergestellt werden kann.

Mit nochmals anderen Worten, ist die Vielzahl von weiteren Energiespeicherzellen in Reihe zwischen den Eingang des Wechselrichterschaltkreises und den Ausgang des Gleichrichterschaltkreises geschaltet, wenn sich das Schaltelement in einem geschlossenen Zustand, also einem elektrisch leitenden Zustand, befindet. Insbesondere sind die Energiespeicherzellen der Vielzahl von Energiespeicherzellen und die weiteren Energiespeicherzellen der Vielzahl weiterer Energiespeicherzellen dann alle zueinander in Reihe geschaltet sowie zwischen den Ausgang des Gleichrichterschaltkreises und den Eingang des Wechselrichterschaltkreises in Reihe geschaltet. Befindet sich das Schaltelement in einem geöffneten Zustand, also einem elektrisch nichtleitenden oder im Wesentlichen nichtleitenden Zustand, so sind die weiteren Energiespeicherzellen nicht mehr in Reihe zwischen den Gleichrichterschaltkreis und den Wechselrichterschaltkreis geschaltet. Die Energiespeicherzellen der Vielzahl von Energiespeicherzellen sind jedoch auch bei geöffnetem Schaltelement weiterhin zueinander in Reihe und zwischen den Ausgang des Gleichrichterschaltkreises und den Eingang des Wechselrichterschaltkreises in Reihe geschaltet.

Auf diese Weise wird in dem Pufferschaltkreis also durch die Vielzahl von Energiespeicherzellen ein fester Teil eines Energiepuffers gebildet und durch die Vielzahl weiterer Energiespeicherzellen ein variabler, also zu- und abschaltbarer, Teil des Energiepuffers.

Auf diese Weise kann dynamisch beziehungsweise flexibel auf Netzspannungsschwankungen oder Schwankungen in der Leistungsaufnahme des Röntgenstrahlerzeugungssystems reagiert werden, indem entsprechend die weiteren Energiespeicherzellen zu- oder abgeschaltet werden.

Auch die weiteren Energiespeicherzellen können vor Beginn des Betriebs des Röntgenstrahlerzeugungssystems entsprechend wie bezüglich der Energiespeicherzellen beschrieben geladen werden.

Insbesondere kann die Vielzahl weiterer Energiespeicherzellen erst nach einer gewissen Zeit nach Scanbeginn und einem entsprechenden Einbruch der Versorgungsspannung des Wechselrichterschaltkreises oder der Zwischenkreisspannung unter einen vorbestimmten Schwellwert zugeschaltet werden. Nach der Zuschaltung können die weiteren Energiespeicherzellen bei Systemen mit hinreichend gutem Netzinnenwiderstand dauerhaft zugeschaltet bleiben. Anderenfalls können die weiteren Energiespeicherzellen über das Schaltelement auch wieder abgekoppelt werden, wenn sie nicht mehr benötigt werden.

Gemäß zumindest einer Ausführungsform weist der Energieversorgungsschaltkreis, insbesondere der Pufferschaltkreis, einen Steuerschaltkreis auf, der dazu eingerichtet ist, eine Eingangsspannung des Wechselrichterschaltkreises, insbesondere eine Zwischenkreisspannung des Gleichspannungszwischenkreises, zu bestimmen. Der Steuerschaltkreis ist mit dem Schaltelement gekoppelt, um dieses abhängig von der Eingangsspannung des Wechselrichterschaltkreises anzusteuern. Der Steuerschaltkreis kann das Schaltelement ansteuern, um die Reihenschaltung der Vielzahl weiterer Energiespeicherzellen zwischen dem Eingang des Wechselrichterschaltkreises und dem Ausgang des Gleichrichterschaltkreises wahlweise herzustellen oder zu unterbrechen.

Weist der Energieversorgungsschaltkreis den Gleichspannungszwischenkreis und insbesondere den Zwischenspeicherkondensator oder die zueinander parallel geschalteten Zwischenspeicherkondensatoren auf, so entspricht die Eingangsspannung des Wechselrichterschaltkreises der Zwischenkreisspannung des Gleichspannungszwischenkreises, also der Spannung über dem Zwischenspeicherkondensator beziehungsweise den Zwischenspeicherkondensatoren.

Gemäß zumindest einer Ausführungsform ist der Steuerschaltkreis dazu eingerichtet, das Schaltelement zur Herstellung der Reihenschaltung der Vielzahl weiterer Energiespeicherzellen zwischen dem Eingang des Wechselrichterschaltkreises und dem Ausgang des Gleichrichterschaltkreises anzusteuern, wenn, insbesondere genau dann, wenn, die Eingangsspannung des Wechselrichterschaltkreises einen vorgegebenen Schwellwert unterschreitet.

Dass die Eingangsspannung den Schwellwert unterschreitet, kann insbesondere derart verstanden werden, dass der Wert der Eingangsspannung zunächst größer ist als der Schwellwert und danach kleiner als der Schwellwert.

Die Reihenschaltung kann auf diese Weise insbesondere hergestellt werden, wenn nach Betriebsbeginn des Röntgenstrahlerzeugungssystems der Schwellwert durch die Eingangsspannung erstmals unterschritten wird.

Gemäß zumindest einer Ausführungsform weist der Energieversorgungsschaltkreis, beispielsweise der Pufferschaltkreis, ein Ladegerät auf, das mit der Vielzahl von Energiespeicherzellen zum Laden der Vielzahl von Energiespeicherzellen verbindbar oder verbunden ist.

In entsprechenden Ausführungsformen kann das Ladegerät auch mit der Vielzahl weiterer Energiespeicherzellen verbunden oder verbindbar sein, um auch diese zu laden. Alternativ kann ein weiteres Ladegerät zum Laden der Vielzahl weiterer Energiespeicherzellen vorgesehen sein.

Die Energiespeicherzellen der Vielzahl von Energiespeicherzellen und, in entsprechenden Ausführungsformen, die weiteren Energiespeicherzellen der Vielzahl von weiteren Energiespeicherzellen können in verschiedenen Ausführungsformen als Kondensatoren, insbesondere als Doppelschichtkondensatoren, ausgebildet sein.

Durch die Reihenschaltung der Energiespeicherzellen und gegebenenfalls der weiteren Energiespeicherzellen zueinander und bezüglich des Gleichrichterschaltkreises und des Wechselrichterschaltkreises kann, insbesondere bei Verwendung von Doppelschichtkondensatoren, eine sehr hohe Leistungsdichte auf sehr kleinem Bauraum bereitgestellt werden. Alternativ zu den Kondensatoren können auch Akkumulatorzellen, insbesondere Lithium-Ionen-Akkumulatorzellen, als Energiespeicherzellen oder weitere Energiespeicherzellen des Pufferschaltkreises eingesetzt werden.

Je nach konkreter Auslegung des Röntgenstrahlerzeugungssystems und je nach erforderlicher Leistungsaufnahme kann die Vielzahl von Energiespeicherzellen beispielsweise aus 30 bis 70, beispielsweise 40 bis 60, Energiespeicherzellen bestehen. Die Vielzahl weiterer Energiespeicherzellen kann gegebenenfalls weniger Energiespeicherzellen beinhalten, beispielsweise aus 10 bis 50, insbesondere 20 bis 40, weiteren Energiespeicherzellen bestehen.

Gemäß einem weiteren Aspekt der Erfindung wird auch ein Röntgenstrahlerzeugungssystem angegeben, das einen erfindungsgemäßen Energieversorgungsschaltkreis aufweist sowie eine Röntgenstrahlquelle, die zur Versorgung mit elektrischer Energie mit einem Ausgang des Wechselrichterschaltkreises verbunden ist.

Gemäß zumindest einer Ausführungsform des Röntgenstrahlerzeugungssystems weist dieses eine weitere Röntgenstrahlquelle auf, die parallel zu der Röntgenstrahlquelle geschaltet ist.

Insbesondere bei solchen zwei- oder mehrstrahligen Röntgenstrahlerzeugungssystemen wirkt sich die Erfindung besonders vorteilhaft aus, da hier die Anforderungen an das Energieversorgungsnetz entsprechend signifikant erhöht sind.

Gemäß einem weiteren Aspekt der Erfindung wird ein Computertomographiesystem angegeben, das ein erfindungsgemäßes Röntgenstrahlerzeugungssystem aufweist. Alternativ kann das Röntgenstrahlerzeugungssystem als Computertomographiesystem ausgestaltet sein.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es sind insbesondere auch Ausführungen und Merkmalskombinationen von der Erfindung umfasst, die nicht alle Merkmale eines ursprünglich formulierten Anspruchs aufweisen. Es sind darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- FIG 1: ein schematisches Blockschaltdiagramm einer beispielhaften Ausführungsform eines Energieversorgungsschaltkreises für ein Röntgenstrahlerzeugungssystem gemäß der Erfindung; und
- FIG 2: ein schematisches Blockschaltdiagramm einer weiteren beispielhaften Ausführungsform eines Energieversorgungsschaltkreises für ein Röntgenstrahlerzeugungssystem gemäß der Erfindung.

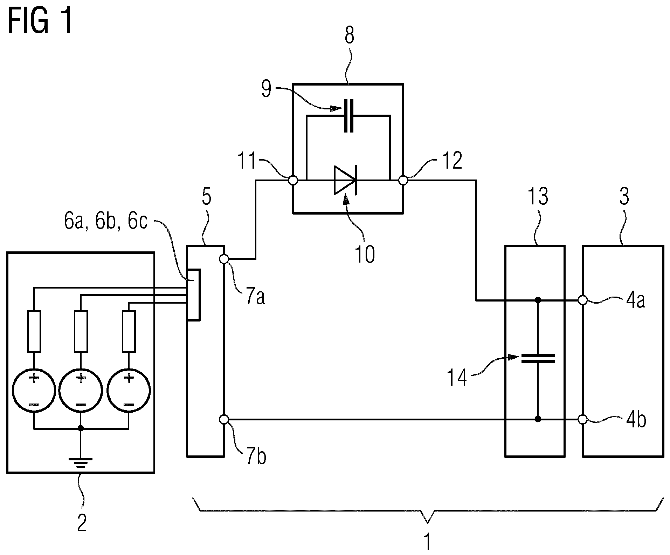

In FIG 1 ist ein Blockschaltbild eines erfindungsgemäßen Energieversorgungsschaltkreises 1 für ein Röntgenstrahlerzeugungssystem gezeigt sowie schematisch ein Energieversorgungsnetz 2, das beispielsweise als dreiphasiges Wechselstromnetz ausgestaltet ist.

Die einzelnen Phasen des Energieversorgungsnetzes 2 sind an entsprechenden Eingangsanschlüssen 6a, 6b, 6c eines Gleichrichterschaltkreises 5 des Energieversorgungsschaltkreises 1 angeschlossen. Der Energieversorgungsschaltkreis 1 weist außerdem einen Wechselrichterschaltkreis 3 auf sowie einen Gleichspannungszwischenkreis 13 und einen Pufferschaltkreis 8.

Der Gleichrichterschaltkreis 5 kann die von dem Energieversorgungsnetz 2 bereitgestellte Wechselspannung in eine Gleichspannung umwandeln und diese an zwei entsprechenden Ausgängen 7a, 7b des Gleichrichterschaltkreises 5 bereitstellen. Der erste Ausgang 7a des Gleichrichterschaltkreises 5 ist mit einem Eingang 11 des Pufferschaltkreises 8 verbunden und ein Ausgang 12 des Pufferschaltkreises 8 mit einem ersten Eingang 4a des Wechselrichterschaltkreises **3.** Der zweite Ausgang 7b des Gleichrichterschaltkreises 5 ist mit einem zweiten Eingang 4b des Wechselrichterschaltkreises 3 verbunden.

Der Gleichspannungszwischenkreis 13 weist einen Zwischenspeicherkondensator 14 auf, der zwischen den Eingängen 4a, 4b und damit auch zwischen den Ausgang 12 des Pufferschaltkreises 8 und den zweiten Ausgang 7b des Gleichrichterschaltkreises 5 geschaltet ist.

Der Pufferschaltkreis 8 enthält eine Vielzahl zueinander in Reihe geschalteter Energiespeicherzellen 9, die in FIG 1 schematisch durch das Schaltzeichen eines einzelnen Kondensators dargestellt sind.

Die Vielzahl von Energiespeicherzellen 9 ist in Reihe zwischen den Eingang 11 und den Ausgang 12 des Pufferschaltkreises 8 geschaltet. Dementsprechend sind der Pufferschaltkreis 8 und auch die Vielzahl von Energiespeicherzellen 9 in Reihe zwischen den Ausgang 7a des Gleichrichterschaltkreises 5 und den Eingang 4a des Wechselrichterschaltkreises 3 beziehungsweise den Gleichspannungszwischenkreis 13 geschaltet.

Zudem kann der Pufferschaltkreis 8 eine parallel zu der Vielzahl von Energiespeicherzellen 9 geschaltete Diode 10 enthalten. Eine Kathode der Diode 10 ist dabei beispielsweise mit dem Ausgang 12 des Pufferschaltkreises 8 verbunden und eine Anode der Diode 10 mit dem Eingang 11 des Pufferschaltkreises 8.

Der Energieversorgungsschaltkreis 1 weist außerdem ein Ladegerät (in FIG 1 nicht gezeigt) auf, durch das die Vielzahl von Energiespeicherzellen 9 vor dem Beginn des Betriebs aufgeladen werden können.

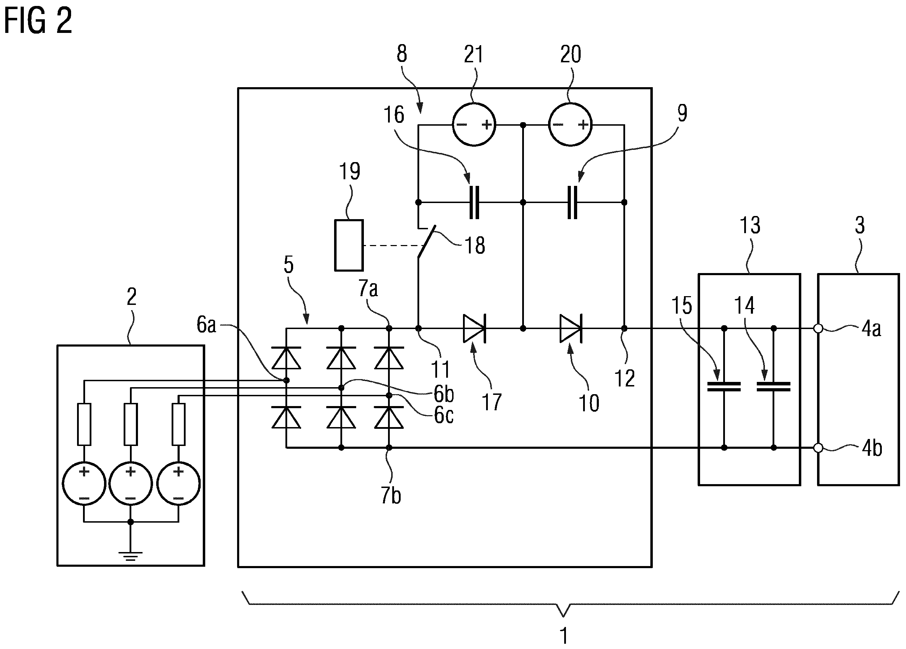

In FIG 2 ist eine schematische Darstellung einer weiteren beispielhaften Ausführungsform des Energieversorgungsschaltkreises 1 gemäß der Erfindung dargestellt, wobei die Ausführungsform der FIG 2 insbesondere auf der Ausführungsform der FIG 1 basiert.

Im Beispiel der FIG 2 enthält der Gleichspannungszwischenkreis 13 einen weiteren Zwischenspeicherkondensator 15, der parallel zum Zwischenspeicherkondensator 14 geschaltet ist. Außerdem enthält der Pufferschaltkreis 8 eine Vielzahl weiterer Energiespeicherzellen 16, die zueinander in Reihe geschaltet sind und zur Vereinfachung ebenfalls durch das Schaltzeichen eines einzelnen Kondensators dargestellt sind. Die Vielzahl weiterer Energiespeicherzellen 16 ist auf einer Seite mit der Vielzahl von Energiespeicherzellen 9 verbunden und auf der anderen Seite schaltbar mit dem Eingang 11 des Pufferschaltkreises 8. Dazu weist der Pufferschaltkreis 8 insbesondere ein Schaltelement 18 auf.

Befindet sich das Schaltelement 18 also in einem geschlossenen Zustand, so sind die Energiespeicherzellen 9 und die weiteren Energiespeicherzellen 16 alle zueinander in Reihe geschaltet und auch zwischen den Eingang 11 und den Ausgang 12 des Pufferschaltkreises 8 in Reihe geschaltet. Befindet sich das Schaltelement 18 in einem offenen Zustand, so sind die weiteren Energiespeicherzellen 16 aus der Reihenschaltung ausgekoppelt und die Energiespeicherzellen 9 sind nach wie vor in Reihe zwischen den Eingang 11 und den Ausgang 12 des Pufferschaltkreises 8 geschaltet.

Zur Ansteuerung des Schaltelements 18 enthält der Energieversorgungsschaltkreis 1 eine Steuereinheit 19, die auch als Steuerschaltkreis bezeichnet werden kann. Die Steuereinheit 19 kann das Schaltelement 18 insbesondere von dem offenen in den geschlossenen Zustand oder umgekehrt schalten. Insbesondere kann die Steuereinheit 19 eine Zwischenkreisspannung des Gleichspannungszwischenkreises 13 bestimmen, also eine Spannung, die über den Zwischenspeicherkondensatoren 14, 15 beziehungsweise zwischen den Eingängen 4a, 4b des Wechselspannungsschaltkreises 3 abfällt. Die Steuereinheit 19 kann die Zwischenkreisspannung mit einem vorgegebenen Schwellwert vergleichen und bei zunächst geöffnetem Schaltelement 18 dieses schließen, wenn die Zwischenkreisspannung unter den vorgegebenen Schwellwert sinkt.

In FIG 2 ist auch das Ladegerät 20 dargestellt. Ferner weist der Energieversorgungsschaltkreis 1 im Beispiel der FIG 2 ein weiteres Ladegerät 21 auf, um die weiteren Energiespeicherzellen 16 entsprechend zu laden. In alternativen Ausführungsformen können die Ladegeräte 20, 21 auch durch ein gemeinsames Ladegerät zum Laden der Energiespeicherzellen 9 und der weiteren Energiespeicherzellen 16 ersetzt sein. Schließlich kann der Pufferschaltkreis 8 eine weitere Diode 17 aufweisen, die parallel zu den weiteren Energiespeicherzellen 16 und in Reihe zur Diode 10 geschaltet ist.

Im Folgenden werden weitere Einzelheiten der Erfindung anhand der FIG 1 und FIG 2 sowie entsprechender Dimensionierungs- und Auslegungsbeispiele erläutert. Diese sind für die Erfindung keineswegs beschränkend. Die konkrete Auslegung kann je nach gegebenen Anforderungen unterschiedlich sein.

Die Röntgenstrahlerzeugungssysteme 1 der FIG 1 und FIG 2 werden dreiphasig, beispielsweise mit einer Spannung von 400 V +10%/-20%, betrieben und stellen wegen ihrer kurzzeitig hohen Leistungsaufnahme sehr hohe Anforderungen an die Infrastruktur, beispielsweise Sicherungen, Kabelquerschnitte, und so weiter, des Gebäudes in dem sie installiert werden. Der Netzinnenwiderstand des Energieversorgungsnetzes 2 am Anschlusspunkt darf nur so hoch sein, dass der Spannungseinbruch während einer Röntgenaufnahme nicht zu einer Unterspannung für gleichzeitig angeschlossene Geräte führt.

Diese bringt nicht nur hohe Anforderungen an die Gebäudeinstallation mit sich, sondern kann auch die mögliche Scanleistung pro Anschlusspunkt begrenzen. Sollte bei einem Computertomographiesystem beispielsweise eine Rotationsgeschwindigkeit der Scan-Einheit, auch als Gantry bezeichnet, erhöht werden, beispielsweise entsprechend einer Erhöhung der Rotationsfrequenz von 4 Hz auf 5 Hz, so müsste die Scanleistung für eine gleichbleibende Dosis pro Bild beispielsweise von 120 kW auf 150 kW erhöht werden. Damit würde bei der kleinsten zulässigen Netzspannung eine Netzimpedanz von 60 mΩ benötigt, was technisch extrem anspruchsvoll wäre.

Die Verwendung eines gemeinsamen Netzanschlusses für ein Zweistrahlersystem oder der Betrieb eines Hochleistungs- Computertomographiesystems an einem schwachen Netzanschluss sind damit nach aktuellem Stand der Technik nicht möglich.

Diesen Einschränkungen begegnen die erfindungsgemäßen Röntgenstrahlerzeugungssysteme 1 der FIG 1 und FIG 2, indem der Pufferschaltkreis 8 zwischen den Gleichrichterschaltkreis 5 und den Gleichspannungszwischenkreis 13 geschaltet ist, der durch die Energiespeicherzellen 9 und optional die weiteren Energiespeicherzellen 16, die beispielsweise als in Serie geschaltete Doppelschichtkondensatoren oder Zweischichtkondensatoren ausgestaltet sind, der vor dem Scanbeginn anhand der Ladegeräte 16, 21 auf eine variable Spannung aufgeladen werden kann. Dadurch kann die Zwischenkreisspannung auf einen konstanten Wert im Bereich einer maximal zulässigen Zwischenkreisspannung angehoben werden, die beispielsweise 750 V betragen kann.

Der Pufferschaltkreis 8 kann gemeinsam mit dem Gleichrichterschaltkreis 5, dem Gleichspannungszwischenkreis 13 und dem Wechselrichterschaltkreis 3 verbaut sein oder er kann separat verbaut sein. Die sich ergebende Reduzierung der Leistungsaufnahme ergibt sich aus der Auslegung, insbesondere der Maximalspannung, der Kapazität und des Innenwiderstands der Energiespeicherzellen 9, 16.

Die Zwischenkreisspannung soll in einem Auslegungsbeispiel unabhängig vom Energieversorgungsnetz 2 im Bereich 650 V bis 720 V bewegen, um die Stromaufnahme des Röntgenstrahlerzeugungssystems zu reduzieren. Die verfügbare Spanne kann in einen Spannungsabfall des Energiespeichers durch Entladung und einen Netzspannungseinbruch entsprechend der Netzimpedanz aufgeteilt werden.

Die Gesamtspannung des Pufferschaltkreises 8 soll dann ausreichen, um bei einbrechender Netzspannung noch eine Zwischenkreisspannung von beispielsweise 720 V erreichen zu können. Sie kann daher zum Beispiel auf 220 V ausgelegt werden.

Ein Einbruch aufgrund der Netz- und Speicherimpedanz, durch Übergangswiderstände, und so weiter, kann optional durch den schaltbaren Teil des Pufferschaltkreises 8 in Form der weiteren Energiespeicherzellen 16 kompensiert werden. Diese können zum Beispiel erst nach einer gewissen Zeit nach Scanstart und einem Einbruch der Zwischenkreisspannung unter einen bestimmten Wert zugeschaltet werden. Bei einer Stromaufnahme von 250 A, gemeint ist der Effektivwert gemäß quadratischem Mittel, und einem Netzinnenwiderstand von 150 mΩ beträgt der Einbruch zum Beispiel rund 90 V, die Spannung des schaltbaren Teils des Energiepuffers kann daher beispielsweise auf 75 V ausgelegt werden. Die weiteren Energiespeicherzellen 16 können abhängig von der aktuellen Zwischenkreisspannung mittels der Steuereinheit 19 über das Schaltelement 18 zugeschaltet werden. Das Schaltelement 18 kann dabei eine pulsförmige Stromaufnahme aufweisen und im stromlosen Zustand geschaltet werden.

Die weiteren Energiespeicherzellen 16 können bei Systemen mit hinreichend gutem Netzinnenwiderstand dauerhaft zugeschaltet bleiben. Wenn sie zur Kompensation des Netzspannungseinbruchs benötigt werden, dann können die Energiespeicherzellen 9 und die weiteren Energiespeicherzellen 16 insgesamt beispielsweise bis 750 V aufgeladen werden.

In entsprechenden Ausführungsformen richtet sich die benötigte Kapazität der Doppelschichtkondensatoren im Wesentlichen nach der Grenzlastkurve der Röntgenquelle oder der Röntgenquellen. Beim Einsatz zweier 90 kW Röntgenquellen an einem einzelnen für ein 120 kW System ausgelegten Netzanschluss mit üblichem Verlauf der Grenzlastkurve reichen beispielsweise Doppelschichtkondensatoren mit einer Kapazität von 1800 F aus.

Die Anzahl der Energiespeicherzellen 9 kann beispielsweise auf 45-55 Stück ausgelegt werden, die der optionalen weiteren Energiespeicherzellen 16 beispielsweise auf 25-30 Stück, wobei die einzelne Zellenspannung zum Beispiel kurz vor dem Scan auf je 2,7 V aufgeladen werden kann. Ansonsten kann die Zellenspannung zur Lebensdauerverlängerung auf einen niedrigen Wert geregelt werden.

Bei kleinstmöglicher Netzspannung und kleinstmöglicher Leistung werden können etwa 40 % der Ausgangsleistung aus dem Pufferschaltkreis gewonnen werden. Bei einer maximalen Durchschnittsleistung von beispielsweise 6 kW für ein Zweistrahlersystem können die Ladegeräte 20, 21 daher beispielsweise so ausgelegt werden, dass sie 2,4 kW liefern können. Diese Leistung wird nur im oberen Spannungsbereich benötigt, eine beispielhafte Auslegung auf 250 V und 15 A bietet daher ausreichend Reserve. Kürzere Zeitintervalle könnten gegebenenfalls zu einer kurzfristigen Erhöhung der Ladeleistung auf 6 kW führen. Im Standby und bei geringster Scanleistung können die Ladegeräte 20, 21 durch eine geeignete Regelung auch zur Verbesserung des Leistungsfaktors des Röntgenstrahlerzeugungssystems beitragen.

Wie beschrieben kann die Erfindung zur Reduzierung der Leistungsaufnahme dienen. Die maximale Stromaufnahme reduziert sich insbesondere in dem Maß, in dem die Zwischenkreisspannung durch den Pufferschaltkreis 8 erhöht wird. Bei einer Pufferspannung von 200 V und einer Zwischenkreisspannung ohne Speicher von 450 V kann die Leistungsaufnahme um etwa 30 % reduziert werden.

Neben der Reduzierung der Leistungsaufnahme eines Röntgenstrahlerzeugungssystems kann der Pufferschaltkreis 8 auch zur Erhöhung der Ausgangsleistung des Röntgenstrahlerzeugungssystems bei gegebenem Netzanschluss genutzt werden. In Verbindung mit dem Pufferschaltkreis 8 wird das Röntgenstrahlerzeugungssystem bei einer höheren Zwischenkreisspannung betrieben, was bei unveränderten internen Strömen zu einer Steigerung der Ausgangsleistung führt. Bei gleichem Eingangsstrom erhöht sich die mögliche Ausgangsleistung im oben genannten Beispiel um etwa 44 %.

Die Reduzierung der maximalen Stromaufnahme des Röntgenstrahlerzeugungssystems kann bei aktuellen Systemen beispielsweise bis zu 40 % betragen. Damit wäre ein 90 kW Computertomographiesystem mit zwei Röntgenstrahlern und nur einem Netzeingang realisierbar.

Außerdem kann die Leistungsaufnahme eines Computertomographiesystems derartig reduziert werden, dass beispielsweise bei gleichbleibender Netzanschlussleistung und Ausführung ein 90 kW Gerät durch ein 120 kW Gerät ersetzt werden könnte.

Durch die Erfindung kann einem Röntgenstrahlerzeugungssystem eine vom Netz weitgehend unabhängige Versorgungsspannung zur Verfügung gestellt werden. Ein für Weitbereichseingang ausgelegtes Röntgenstrahlerzeugungssystem kann durch ein angepasstes Wicklungsverhältnis des Hochspannungstransformators wesentlich mehr Leistung erzielen. Das Röntgenstrahlerzeugungssystem ist wesentlich unabhängiger von der Netzimpedanz des Anschlusspunktes.

Durch eine geeignete Regelung des Ladegeräts kann in verschiedenen Ausführungsformen der Leistungsfaktor des Röntgenstrahlerzeugungssystems, insbesondere im Standby, verbessert werden.

## Patentansprüche

1. Energieversorgungsschaltkreis (1) für ein Röntgenstrahlerzeugungssystem, welches einen Wechselrichterschaltkreis (3) mit einem Ausgang zur Verbindung des Wechselrichterschaltkreises (3) mit einer Röntgenquelle des Röntgenstrahlerzeugungssystems aufweist, der Energieversorgungsschaltkreis (1) aufweisend
- einen Gleichrichterschaltkreis (5) mit einem Eingang (6a, 6b, 6c) zur Verbindung des Gleichrichterschaltkreises (5) mit einem Energieversorgungsnetz (2), wobei ein Ausgang (7a) des Gleichrichterschaltkreises (5) mit einem Eingang (4a) des Wechselrichterschaltkreises (3) verbindbar ist;
**dadurch gekennzeichnet, dass**
- der Energieversorgungsschaltkreis (1) einen Pufferschaltkreis (8) aufweist, der eine Vielzahl von zueinander in Reihe geschalteten elektrischen Energiespeicherzellen (9) aufweist;
- die Vielzahl von Energiespeicherzellen (9) in Reihe zwischen den Eingang (4a) des Wechselrichterschaltkreises (3) und den Ausgang (7a) des Gleichrichterschaltkreises (5) schaltbar ist; und
- der Energieversorgungsschaltkreis (1) einen Gleichspannungszwischenkreis (13) aufweist, der zwischen den Eingang (4a) des Wechselrichterschaltkreises (3) und den Pufferschaltkreis (7) schaltbar oder geschaltet ist.

2. Energieversorgungsschaltkreis (1) für ein Röntgenstrahlerzeugungssystem, der Energieversorgungsschaltkreis (1) aufweisend
- einen Wechselrichterschaltkreis (3) mit einem Ausgang zur Verbindung des Wechselrichterschaltkreises (3) mit einer Röntgenquelle des Röntgenstrahlerzeugungssystems;
- einen Gleichrichterschaltkreis (5) mit einem Eingang (6a, 6b, 6c) zur Verbindung des Gleichrichterschaltkreises (5) mit einem Energieversorgungsnetz (2), wobei ein Ausgang (7a) des Gleichrichterschaltkreises (5) mit einem Eingang (4a) des Wechselrichterschaltkreises (3) verbunden ist;
**dadurch gekennzeichnet, dass**
- der Energieversorgungsschaltkreis (1) einen Pufferschaltkreis (8) aufweist, der eine Vielzahl von zueinander in Reihe geschalteten elektrischen Energiespeicherzellen (9) aufweist; und
- die Vielzahl von Energiespeicherzellen (9) in Reihe zwischen den Eingang (4a) des Wechselrichterschaltkreises (3) und den Ausgang (7a) des Gleichrichterschaltkreises (5) geschaltet ist; und
- der Wechselrichterschaltkreis (3) einen Gleichspannungszwischenkreis (13) aufweist, der zwischen den Eingang (4a) des Wechselrichterschaltkreises (3) und den Pufferschaltkreis (7) schaltbar oder geschaltet ist.

3. Energieversorgungsschaltkreis (1) nach einem der vorhergehenden Ansprüche, wobei der Gleichspannungszwischenkreis (13) einen Zwischenspeicherkondensator (14, 15) enthält.

4. Energieversorgungsschaltkreis (1) nach einem der vorhergehenden Ansprüche, der Pufferschaltkreis (8) aufweisend
- eine Vielzahl von zueinander in Reihe geschalteten weiteren elektrischen Energiespeicherzellen (16); und
- ein Schaltelement (18), das angeordnet und dazu eingerichtet ist, eine Reihenschaltung der Vielzahl weiterer Energiespeicherzellen (16) zwischen dem Eingang (4a) des Wechselrichterschaltkreises (3) und dem Ausgang (7a) des Gleichrichterschaltkreises (5) wahlweise herzustellen und zu unterbrechen.

5. Energieversorgungsschaltkreis nach Anspruch 4, aufweisend einen Steuerschaltkreis (19), welcher
- dazu eingerichtet ist, eine Eingangsspannung des Wechselrichterschaltkreises (3) zu bestimmen;
- mit dem Schaltelement (18) gekoppelt ist, um dieses abhängig von der Eingangsspannung des Wechselrichterschaltkreises (3) zur wahlweisen Herstellung und Unterbrechung der Reihenschaltung der Vielzahl weiterer Energiespeicherzellen (16) zwischen dem Eingang (4a) des Wechselrichterschaltkreises (3) und dem Ausgang (7a) des Gleichrichterschaltkreises (5) anzusteuern.

6. Energieversorgungsschaltkreis (1) nach Anspruch 5, wobei der Steuerschaltkreis (19) dazu eingerichtet ist, das Schaltelement (18) zur Herstellung der Reihenschaltung der Vielzahl weiterer Energiespeicherzellen (16) zwischen dem Eingang (4a) des Wechselrichterschaltkreises (3) und dem Ausgang (7a) des Gleichrichterschaltkreises (5) anzusteuern, wenn die Eingangsspannung des Wechselrichterschaltkreises (3) einen vorgegebenen Schwellwert unterschreitet.

7. Energieversorgungsschaltkreis (1) nach einem der vorhergehenden Ansprüche, aufweisend ein Ladegerät, das mit der Vielzahl von Energiespeicherzellen (9) zum Laden der Vielzahl von Energiespeicherzellen (9) verbindbar oder verbunden ist.

8. Energieversorgungsschaltkreis (1) nach einem der vorhergehenden Ansprüche, wobei die Energiespeicherzellen (9) der Vielzahl von Energiespeicherzellen (9) als Doppelschichtkondensatoren ausgebildet sind.

9. Energieversorgungsschaltkreis (1) nach einem der Ansprüche 1 bis 7, wobei die Energiespeicherzellen (9) der Vielzahl von Energiespeicherzellen (9) als Akkumulatorzellen, insbesondere als Lithium-Ionen-Akkumulatorzellen, ausgebildet sind.

10. Energieversorgungsschaltkreis (1) nach einem der vorhergehenden Ansprüche, wobei die Vielzahl von Energiespeicherzellen (9) aus 30 bis 70 Energiespeicherzellen (9), beispielsweise aus 40 bis 60 Energiespeicherzellen (9), besteht.

11. Röntgenstrahlerzeugungssystem aufweisend einen Energieversorgungsschaltkreis (1) nach einem der vorhergehenden Ansprüche, den Wechselrichterschaltkreis (4) und eine Röntgenstrahlquelle, die zur Versorgung mit elektrischer Energie mit einem Ausgang des Wechselrichterschaltkreises (3) verbunden ist.

12. Röntgenstrahlerzeugungssystem nach Anspruch 11, aufweisend eine weitere Röntgenstrahlquelle, die parallel zu der Röntgenstrahlquelle geschaltet ist.

13. Röntgenstrahlerzeugungssystem nach einem der Ansprüche 11 oder 12, wobei das Röntgenstrahlerzeugungssystem als Computertomographiesystem ausgestaltet ist.

## Claims

1. Power supply circuit (1) for an X-ray generation system, which has an inverter circuit (3) with an output for connecting the inverter circuit (3) to an X-ray source of the X-ray generation system, the power supply circuit (1) having
- a rectifier circuit (5) with an input (6a, 6b, 6c) for connecting the rectifier circuit (5) to a power supply network (2), wherein an output (7a) of the rectifier circuit (5) is able to be connected to an input (4a) of the inverter circuit (3);
**characterised in that**
- the power supply circuit (1) has a buffer circuit (8), which has a plurality of electrical energy storage cells (9) interconnected in series;
- the plurality of energy storage cells (9) is able to be connected in series between the input (4a) of the inverter circuit (3) and the output (7a) of the rectifier circuit (5); and
- the power supply circuit (1) has a DC link circuit (13) which is able to be connected or is connected between the input (4a) of the inverter circuit (3) and the buffer circuit (7).

2. Power supply circuit (1) for an X-ray generation system, the power supply circuit (1) having
- an inverter circuit (3) with an output for connecting the inverter circuit (3) to an X-ray source of the X-ray generation system;
- a rectifier circuit (5) with an input (6a, 6b, 6c) for connecting the rectifier circuit (5) to a power supply network (2), wherein an output (7a) of the rectifier circuit (5) is connected to an input (4a) of the inverter circuit (3);
**characterised in that**
- the power supply circuit (1) has a buffer circuit (8), which has a plurality of electrical energy storage cells (9) interconnected in series; and
- the plurality of energy storage cells (9) is connected in series between the input (4a) of the inverter circuit (3) and the output (7a) of the rectifier circuit (5); and
- the inverter circuit (3) has a DC link circuit (13) which is able to be connected or is connected between the input (4a) of the inverter circuit (3) and the buffer circuit (7).

3. Power supply circuit (1) according to one of the preceding claims, wherein the DC link circuit (13) contains an intermediate storage capacitor (14, 15).

4. Power supply circuit (1) according to one of the preceding claims, the buffer circuit (8) having
- a plurality of additional electrical energy storage cells (16) interconnected in series; and
- a switching element (18), which is arranged and is configured to selectively establish and interrupt a series connection of the plurality of additional energy storage cells (16) between the input (4a) of the inverter circuit (3) and the output (7a) of the rectifier circuit (5).

5. Power supply circuit according to claim 4, having a control circuit (19), which
- is configured to ascertain an input voltage of the inverter circuit (3);
- is coupled to the switching element (18) in order to control said switching element to selectively establish and interrupt the series connection of the plurality of additional energy storage cells (16) between the input (4a) of the inverter circuit (3) and the output (7a) of the rectifier circuit (5) depending on the input voltage of the inverter circuit (3).

6. Power supply circuit (1) according to claim 5, wherein the control circuit (19) is configured to control the switching element (18) to establish the series connection of the plurality of additional energy storage cells (16) between the input (4a) of the inverter circuit (3) and the output (7a) of the rectifier circuit (5) if the input voltage of the inverter circuit (3) exceeds a predefined threshold value.

7. Power supply circuit (1) according to one of the preceding claims, having a charging device, which is able to be connected or is connected to the plurality of energy storage cells (9) for charging the plurality of energy storage cells (9).

8. Power supply circuit (1) according to one of the preceding claims, wherein the energy storage cells (9) of the plurality of energy storage cells (9) are embodied as double-layer capacitors.

9. Power supply circuit (1) according to one of claims 1 to 7, wherein the energy storage cells (9) of the plurality of energy storage cells (9) are embodied as battery cells, in particular as lithium-ion battery cells.

10. Power supply circuit (1) according to one of the preceding claims, wherein the plurality of energy storage cells (9) consists of 30 to 70 energy storage cells (9), for example of 40 to 60 energy storage cells (9).

11. X-ray generation system having a power supply circuit (1) according to one of the preceding claims, the inverter circuit (4) and an X-ray source, which is connected to an output of the inverter circuit (3) for the supply of electrical energy thereto.

12. X-ray generation system according to claim 11, having an additional X-ray source which is connected in parallel to the X-ray source.

13. X-ray generation system according to one of claims 11 or 12, wherein the X-ray generation system is configured as a computed tomography system.

## Revendications

1. Circuit (1) d'alimentation en électricité d'un système de production de rayons X, qui a un circuit (3) onduleur ayant une sortie de connexion du circuit (3) onduleur à une source de rayons X du système de production de rayons X, le circuit (1) d'alimentation en électricité comportant
- un circuit (5) redresseur ayant une entrée (6a, 6b, 6c) de connexion du circuit (5) redresseur à un réseau (2) d'alimentation en électricité, dans lequel une sortie (7a) du circuit (5) redresseur peut être connectée à une entrée (4a) du circuit (3) onduleur ;
**caractérisé en ce que**
- le circuit (1) d'alimentation en électricité a un circuit (8) tampon, qui a une pluralité de cellules (9) d'accumulation d'énergie électrique montées en série les unes avec les autres ;
- la pluralité de cellules (9) d'accumulation d'énergie peut être montée en série entre l'entrée (4a) du circuit (3) onduleur et la sortie (7a) du circuit (5) redresseur ; et
- le circuit (1) d'alimentation en électricité a un circuit (13) intermédiaire à tension continue, qui est monté entre l'entrée (4a) du circuit (3) onduleur et le circuit (7) tampon ou peut l'être.

2. Circuit (1) d'alimentation en électricité d'un système de production de rayons X, le circuit (1) d'alimentation en électricité comportant
- un circuit (3) onduleur ayant une sortie de connexion du circuit (3) onduleur à une source de rayons X du système de production de rayons X ;
.
- un circuit (5) redresseur ayant une entrée (6a, 6b, 6c) de connexion du circuit (5) redresseur à un réseau (2) d'alimentation en électricité, dans lequel une sortie (7a) du circuit (5) redresseur est connectée à une entrée (4a) du circuit (3) onduleur ;
**caractérisé en ce que**
- le circuit (1) d'alimentation en électricité a un circuit (8) tampon, qui a une pluralité de cellules (9) d'accumulation d'énergie électrique montées en série les unes avec les autres ; et
- la pluralité de cellules (9) d'accumulation d'énergie est montée en série entre l'entrée (4a) du circuit (3) onduleur et la sortie (7a) du circuit (5) redresseur ; et
- le circuit (3) onduleur a un circuit (13) intermédiaire à tension continue, qui est monté entre l'entrée (4a) du circuit (3) onduleur et le circuit (7) tampon ou peut l'être.

3. Circuit (1) d'alimentation en électricité suivant l'une des revendications précédentes, dans lequel le circuit (13) intermédiaire à tension continue comporte un condensateur (14, 15) d'accumulation intermédiaire.

4. Circuit (1) d'alimentation en électricité suivant l'une des revendications précédentes, le circuit (8) tampon comportant
- une pluralité d'autres cellules (16) d'accumulation d'énergie électrique montées en série les unes avec les autres ; et
- un élément (18) de coupure, qui est monté et agencé pour, au choix, ménager et interrompre un circuit série de la pluralité d'autres cellules (16) d'accumulation d'énergie entre l'entrée (4a) du circuit (3) onduleur et la sortie (7a) du circuit (5) redresseur.

5. Circuit d'alimentation en électricité suivant la revendication 4, comportant un circuit (19) de commande, qui
- est agencé pour déterminer une tension d'entrée du circuit (3) onduleur ;
- est connecté par l'élément (18) de coupure pour commander celui-ci en fonction de la tension d'entrée du circuit (3) onduleur pour la production et l'interruption au choix du circuit série de la pluralité d'autres cellules (16) d'accumulation d'énergie entre l'entrée (4a) du circuit (3) onduleur et la sortie (7a) du circuit (5) redresseur.

6. Circuit (1) d'alimentation en électricité suivant la revendication 5, dans lequel le circuit (19) de commande est agencé pour commander l'élément (18) de coupure pour la production du circuit série de la pluralité d'autres cellules (16) d'accumulation d'énergie entre l'entrée (4a) du circuit (3) onduleur et la sortie (7a) du circuit (5) redresseur, si la tension d'entrée du circuit (3) onduleur est inférieure à une valeur de seuil donnée à l'avance.

7. Circuit (1) d'alimentation en électricité suivant l'une des revendications précédentes, comprenant un appareil de charge, qui, pour la charge de la pluralité de cellules (9) d'accumulation d'énergie, est connecté à la pluralité de cellules (9) d'accumulation d'énergie ou peut l'être.

8. Circuit (1) d'alimentation en électricité suivant l'une des revendications précédentes, dans lequel les cellules (9) d'accumulation en énergie de la pluralité de cellules (9) d'accumulation d'énergie sont constituées sous la forme de condensateurs à couche double.

9. Circuit (1) d'alimentation en électricité suivant l'une des revendications 1 à 7, dans lequel les cellules (9) d'accumulation
.
d'énergie de la pluralité de cellules (9) d'accumulation d'énergie sont constituées sous la forme de cellules d'accumulateur, en particulier de cellules d'accumulateur aux ions lithium.

10. Circuit (1) d'alimentation en électricité suivant l'une des revendications précédentes, dans lequel la pluralité de cellules (9) d'accumulation d'énergie est constituée de 30 à 70 cellules (9) d'accumulation d'énergie, par exemple de 40 à 60 cellules (9) d'accumulation d'énergie.

11. Système de production de rayons X, comportant un circuit (1) d'alimentation en électricité suivant l'une des revendications précédentes, le circuit (4) onduleur et une source de rayons X, qui, pour l'alimentation en énergie électrique, est connectée à une sortie du circuit (3) onduleur.

12. Système de production de rayons X suivant la revendication 11, comportant une autre source de rayons X, qui est montée en parallèle à la source de rayons X.

13. Système de production de rayons X suivant l'une des revendications 11 ou 12, dans lequel le système de production de rayons X est conformé en système de tomodensitométrie assisté par ordinateur.
.
